(19) Europäisches Patentamt
European Patent Office
Office européen des brevets

(11) **EP 4 645 805 A1**

(12) **EUROPEAN PATENT APPLICATION**
published in accordance with Art. 153(4) EPC

(43) Date of publication:
**05.11.2025 Bulletin 2025/45**

(21) Application number: **23929979.5**

(22) Date of filing: **23.11.2023**

(51) International Patent Classification (IPC):
**H04L 41/5061** (2022.01)      **H04L 41/5009** (2022.01)
**H04L 41/147** (2022.01)

(52) Cooperative Patent Classification (CPC):
**H04L 41/14; H04L 41/147; H04L 41/149;**
**H04L 41/5009; H04L 41/5061**

(86) International application number:
**PCT/CN2023/133520**

(87) International publication number:
**WO 2024/198411 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2023  CN 202310348130**

(71) Applicant: **Huawei Technologies Co., Ltd.**
**Shenzhen, Guangdong 518129 (CN)**

(72) Inventors:
• **JI, Shuangfeng**
  **Shenzhen, Guangdong 518129 (CN)**
• **HU, Jia**
  **Shenzhen, Guangdong 518129 (CN)**
• **JU, Shuang**
  **Shenzhen, Guangdong 518129 (CN)**
• **YANG, Zhuoqun**
  **Shenzhen, Guangdong 518129 (CN)**
• **GUAN, Jian**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **METHOD FOR MANAGING SERVICE CHANNEL, MANAGEMENT APPARATUS, AND SYSTEM**

(57)    This application discloses a service channel management method, which is applicable to a cloud system (a cloud communication platform CPaaS). The method includes: obtaining a plurality of first service channels, where a service capability of each first service channel matches a service quality requirement; and determining a quality prediction result of each first service channel in a second periodicity based on a service quality parameter of the first service channel in a first periodicity, where the service quality parameter is used to describe service quality of the corresponding first service channel in the first periodicity, and the second periodicity is an unstarted periodicity after the first periodicity. Based on the solutions provided in this application, the cloud communication platform can predict service quality of an unstarted periodicity based on a service quality parameter of a historical periodicity, and can sense a problem of a service channel before a service channel failure, improving timeliness of service channel monitoring and service channel reliability.

FIG. 3A

## Description

This application claims priority to Chinese Patent Application No. 202310348130.3, filed with the China National Intellectual Property Administration on March 27, 2023 and entitled "SERVICE CHANNEL MANAGEMENT METHOD, MANAGEMENT APPARATUS, AND SYSTEM", which is incorporated herein by reference in its entirety.

## TECHNICAL FIELD

This application relates to the field of communication technologies, and specifically, to a service channel management method, a management apparatus, and a system.

## BACKGROUND

A communications platform as a service (communications platform as a service, CPaaS) is also referred to as a cloud communication platform. The cloud communication platform is based on a cloud system, and can connect a network system of a supplier and a client. The cloud communication platform aims to provide customers with stable, reliable, and highly reachable communication services, and completes service closure by integrating service channels of the supplier, to complete a service closed-loop. Therefore, quality and reliability of the service channels of the supplier affect service quality of the cloud communication platform.

The cloud communication platform can monitor the quality of the service channels and switch a faulty service channel in time. In addition, because different customers have different service quality requirements, the cloud communication platform needs to find service channels that meet the service quality requirements of the customers. Therefore, the cloud communication platform needs to accurately monitor the quality of the service channels to schedule proper service channels for the customers.

Currently, the cloud communication platform usually depends on sensing of a service channel failure or a switchover retry capability after a service failure to monitor the quality of the service channels, resulting in low reliability of a service channel. Therefore, how to improve quality monitoring of the service channels becomes an urgent problem to be resolved on the cloud communication platform.

## SUMMARY

This application provides a service channel management method, to improve timeliness of monitoring service channel quality and reliability of a service channel. This application further provides a service model training method, a corresponding apparatus, a computer-readable storage medium, a computer program product, a cloud system, and the like.

A first aspect of this application provides a service channel management method, where the method is applied to a cloud system, and the method includes: obtaining a plurality of first service channels, where a service capability of each first service channel matches a service quality requirement; and determining a quality prediction result of each first service channel in a second periodicity based on a service quality parameter of the first service channel in a first periodicity, where the service quality parameter is used to describe service quality of the corresponding first service channel in the first periodicity, and the second periodicity is an unstarted periodicity after the first periodicity.

In this application, the service channel is a network channel provided by a supplier, and a communications platform as a service (communications platform as a service, CPaaS) is also referred to as a cloud communication platform, and can connect a service channel of the supplier and a client. The cloud communication platform can manage service channels of each supplier, and schedule proper service channels for clients.

In this application, the service quality requirement may be recorded in a customer order or a service agreement of the cloud communication platform for a customer, and the cloud communication platform may obtain the service quality requirement from the customer order or the service agreement. The service agreement may be a service agreement of a message type, for example, a short message service agreement or a service agreement of another type, for example, a service agreement of an artificial intelligence (artificial intelligence, AI) model processing type.

In this application, the service quality requirement may include a service level agreement (service level agreement, SLA). Certainly, the service quality requirement may further include other customer information, for example, at least one of a sending account, a capability type, a customer level, a code number requirement, an extension bit length, a concurrency quantity, a sending quantity, a resending policy, a capability price, and the like.

In this application, that a service capability of each first service channel matches a service quality requirement means that each first service channel can meet a service quality requirement proposed in a customer order or a service agreement. In other words, the first service channel is determined by the cloud communication platform based on the service quality requirement and basic service channel information, where the basic service channel information may include at least one of a supplier name, an access account, a capability type, a code number capability, an extension bit length, a concurrency quantity, a sending quantity, a committed SLA, signature support, a sending range, a coverage area, complaint rate control, a stability level, mobile number portability support, a capability price, and the like.

In this application, the first periodicity is a period of time in history, and is a historical periodicity that has ended, and the second periodicity is a future period of time, that is, an unstarted periodicity.

In this application, the service quality parameter is a parameter, for example, a concurrency quantity, a delay, or a successful delivery rate, related to service quality of the service channel. Certainly, the service quality parameter may further include another parameter, for example, an unknown rate, that can represent service quality. The unknown rate indicates that no feedback message indicating a sending success or a sending failure is obtained, and service quality of a service channel with a high unknown rate is worse than service quality of a service channel with a low unknown rate.

In the solution provided in the first aspect of this application, the cloud communication platform can predict service quality of a service channel in an unstarted periodicity based on a service quality parameter of the service channel in a historical periodicity that has ended. In this way, a problem of the service channel can be sensed before a service channel failure. Therefore, timeliness of monitoring the service channel and reliability of the service channel are improved.

In a possible implementation, the method further includes: managing the plurality of first service channels based on the quality prediction result of each first service channel in the second periodicity.

In this possible implementation, the cloud communication platform can manage a service channel based on a quality prediction result of the service channel in a future periodicity, thereby improving accuracy of service channel management.

In a possible implementation, the second service channel is scheduled for a service request, and the second service channel is a first service channel whose service quality indicated by a quality prediction result exceeds a first quality threshold.

In this possible implementation, the cloud communication platform can schedule a service channel with good service quality for the service request, thereby improving the service quality.

In a possible implementation, the service request is from a client using a service agreement, and the service agreement includes the service quality requirement.

In this possible implementation, after signing the service agreement with a customer, the cloud communication platform may provide, for the service request sent by each client using the service agreement, a service that meets the service quality requirement.

In a possible implementation, the second service channel is a service channel with a highest scheduling ranking in first service channels whose service quality indicated by quality prediction results exceeds the first quality threshold, a scheduling ranking is associated with a scheduling policy, and the scheduling policy is used to describe a scheduling priority principle.

In this possible implementation, there may be a plurality of types of scheduling policies, for example, a very important person (very important person, VIP) policy, a bidding policy, and a comprehensive policy. The scheduling policies may be recorded in the customer order or the service agreement. The VIP policy may describe preferential scheduling of a service channel with best quality. The bidding policy may describe preferential scheduling of a service channel with a most proper price. The comprehensive policy may describe preferential scheduling of a service channel with highest cost performance. The scheduling policy may affect the scheduling ranking. When scheduling a service channel for a service request, the cloud communication platform considers not only service quality of the service channel, but also the scheduling ranking. In this way, most proper service channels can be scheduled for customers with different requirements, thereby improving accuracy of service channel scheduling.

In a possible implementation, a score used to determine the scheduling ranking is determined based on a scheduling factor in a scheduling score relational expression and a weight corresponding to the scheduling factor, and weights corresponding to scheduling factors in scheduling score relational expressions corresponding to different scheduling policies are different.

In this possible implementation, the scheduling score relational expression is a relational expression used to determine a scheduling score, the scheduling score relational expression includes a plurality of scheduling factors, and each scheduling factor has a corresponding weight. The scheduling factor may include at least one of channel quality (a delay and a successful delivery rate), channel costs, a channel capacity (a concurrency quantity and a message amount), a complaint rate threshold, and the like. The scheduling factors in the scheduling score relational expressions corresponding to the different scheduling policies may be the same, but the weights corresponding to the scheduling factors are not completely the same. In this way, for different scheduling policies, different scheduling scores may be obtained for a same service channel, and scheduling rankings of the service channel are also different. In this way, for customers that need different scheduling policies, service channels most suitable for the customers can be scheduled.

In a possible implementation, the method further includes: performing operation and maintenance management on a third service channel, where the third service channel is a first service channel whose service quality indicated by a quality prediction result is lower than a second quality threshold.

In this possible implementation, when quality of the service channel in the second periodicity is predicted to be poor, it indicates that the quality of the service channel is about to deteriorate. In this case, intervention may be performed in advance through a measure such as alarm, shutdown, or manual switching, to ensure that user-oriented service quality is not affected.

In a possible implementation, there are a plurality of first periodicities.

In this possible implementation, there are the plurality of first periodicities, so that accuracy of predicting a quality prediction result of the second periodicity can be improved.

In a possible implementation, the plurality of first periodicities are consecutive, and the second periodicity and the plurality of first periodicities are consecutive.

In this possible implementation, prediction is performed based on service quality parameters of the plurality of consecutive first periodicities, so that the accuracy of predicting the quality prediction result of the second periodicity can be further improved.

In a possible implementation, the quality prediction result is obtained through a quality prediction model, and the quality prediction model is a model that uses a first relationship as an input and uses a second relationship as an output. The first relationship is a relationship between a first concurrency quantity of the first service channel in the first periodicity and successful delivery rates under different delays; and the second relationship is a relationship, predicted by the quality prediction model, between a second concurrency quantity of the first service channel in the second periodicity and successful delivery rates under different delays.

In this possible implementation, the cloud communication platform can perform quality prediction through a model of a relationship between a concurrency quantity and successful delivery rates under different delays, to improve accuracy of service quality prediction.

In a possible implementation, the quality prediction result is obtained through a service quality change trend indicated by service quality parameters of the plurality of first periodicities.

In this possible implementation, the cloud communication platform can predict service quality in the second periodicity through a change trend of service quality of the service channel in a plurality of historical periodicities, to improve the accuracy of predicting the service quality of the service channel.

In a possible implementation, the method further includes: after the second periodicity ends, optimizing the quality prediction model based on a difference between actual service quality of each first service channel in the second periodicity and the quality prediction result.

In this possible implementation, in a quality prediction process, the quality prediction model can be continuously optimized. In this way, accuracy of subsequent service quality prediction can be improved.

A second aspect of this application provides a service model training method, including: obtaining a plurality of groups of first samples and second samples of a target service channel, where a service capability of the target service channel matches a to-be-trained service model, the first sample includes a service quality parameter of a first historical periodicity, and the second sample includes a service quality parameter of a second historical periodicity after the first historical periodicity; and training the service model based on the plurality of groups of first samples and second samples to obtain a quality prediction model, where the quality prediction model is used to predict a quality prediction result of an unstarted periodicity after a third historical periodicity based on a service quality parameter of the third historical periodicity.

In a possible implementation, there are a plurality of first historical periodicities.

In a possible implementation, the plurality of first historical periodicities are consecutive, and the plurality of first historical periodicities and the second historical periodicity are consecutive.

In this application, that a service capability of the target service channel matches a to-be-trained service model means that a service type supported by the target service channel is adapted to a structure and a parameter of the service model. For example, the target service channel supports an SMS service, and the service model is a model applicable to the SMS service.

In this application, the service quality parameter may include a concurrency quantity, a delay, a successful delivery rate, and the like. Certainly, the service quality parameter may further include an unknown rate or another parameter that can represent service quality.

An example in which the service quality parameter includes the concurrency quantity, the delay, and the successful delivery rate is used, and content included in the first sample may include a concurrency quantity, a delay, and a successful delivery rate of a historical periodicity 1, a concurrency quantity, a delay, and a successful delivery rate of a historical periodicity 2, ..., and a concurrency quantity, a delay, and a successful delivery rate of a historical periodicity N. The second sample includes a concurrency quantity, a delay, and a successful delivery rate of a historical periodicity N+1. N is generally an integer greater than 1, there may be a correspondence among the concurrency quantity, the delay, and the successful delivery rate, for example, a correspondence among successful delivery rates corresponding to a first concurrency quantity under different delays, and successful delivery rates corresponding to a same concurrency quantity under different delays are usually different.

In this application, the service model may be a service model that uses the correspondences among the concurrency quantities, the delays, and the successful delivery rates of N historical periodicities, namely, the historical periodicity 1, the historical periodicity 2, ..., and the historical periodicity N, as an input, and uses the concurrency quantity, the delay, and the successful delivery rate of the historical periodicity N+1 as an output. A weight in the service model can be trained using the foregoing input and output, to obtain the quality prediction model. The service model may be a long short-term memory (long short-term memory, LSTM) neural network model.

In the second aspect, the cloud communication platform can train the service model by using a service quality parameter of a service channel in each historical periodicity, to obtain the quality prediction model used to predict service quality in a future periodicity.

In a possible implementation, the method further includes: obtaining a service quality parameter corresponding to each of the plurality of first service channels, where the plurality of first service channels are a subset or a universal set of the target service channel, and the service quality parameter is used to describe service quality of the corresponding first service channel in a first periodicity; and determining a quality prediction result of each first service channel in a second periodicity based on the service quality parameter corresponding to each first service channel and the quality prediction model, where the second periodicity is an unstarted periodicity after the first periodicity.

In this possible implementation, the trained quality prediction model can be used to predict a quality prediction result of a service channel, thereby improving reliability of the service channel.

In a possible implementation, the quality prediction model is a model that uses a first relationship as an input and uses a second relationship as an output. The first relationship is a relationship between a first concurrency quantity of the first service channel in the first periodicity and successful delivery rates under different delays; and the second relationship is a relationship, predicted by the quality prediction model, between a second concurrency quantity of the first service channel in the second periodicity and successful delivery rates under different delays.

In a possible implementation, the method further includes: after the second periodicity ends, optimizing the quality prediction model based on a difference between actual service quality of each first service channel in the second periodicity and the quality prediction result.

In this possible implementation, the quality prediction model can be continuously optimized during use, thereby improving accuracy of quality prediction.

A third aspect of this application provides a management apparatus, where the management apparatus is included in a cloud system, and the management apparatus includes:

an obtaining unit, configured to obtain a plurality of first service channels, where a service capability of each first service channel matches a service quality requirement; and

a processing unit, configured to determine a quality prediction result of each first service channel in a second periodicity based on a service quality parameter of the first service channel in a first periodicity, where the service quality parameter is used to describe service quality of the corresponding first service channel in the first periodicity, and the second periodicity is an unstarted periodicity after the first periodicity.

In a possible implementation, a second service channel is scheduled for a service request, and the second service channel is a first service channel whose service quality indicated by a quality prediction result exceeds a first quality threshold; and the service request is from a client using a service agreement, and the service agreement includes the service quality requirement.

In a possible implementation, the second service channel is a service channel with a highest scheduling ranking in first service channels whose service quality indicated by quality prediction results exceeds the first quality threshold, a scheduling ranking is associated with a scheduling policy, and the scheduling policy is used to describe a scheduling priority principle.

In a possible implementation, a score used to determine the scheduling ranking is determined based on a scheduling factor in a scheduling score relational expression and a weight corresponding to the scheduling factor, and weights corresponding to scheduling factors in scheduling score relational expressions corresponding to different scheduling policies are different.

In a possible implementation, the processing unit is further configured to perform operation and maintenance management on a third service channel, where the third service channel is a first service channel whose service quality indicated by a quality prediction result is lower than a second quality threshold.

In a possible implementation, there are a plurality of first periodicities.

In a possible implementation, the plurality of first periodicities are consecutive, and the second periodicity and the plurality of first periodicities are consecutive.

In a possible implementation, the quality prediction result is obtained through a quality prediction model, and the quality prediction model is a model that uses, as an input, a first relationship used to describe service quality in the first periodicity, and uses, as an output, a second relationship used to describe service quality in the second periodicity. The first relationship is a relationship between a first concurrency quantity of the first service channel in the first periodicity and successful delivery rates under different delays; and the second relationship is a relationship, predicted by the quality prediction model, between a second concurrency quantity of the first service channel in the second periodicity and successful delivery rates under different delays.

In a possible implementation, the quality prediction result is obtained through a service quality change trend indicated by service quality parameters of the plurality of first periodicities.

In a possible implementation, the processing unit is further configured to: after the second periodicity ends, optimize the quality prediction model based on a difference between actual service quality of each first service channel in the second periodicity and the quality prediction result.

A fourth aspect of this application provides a management apparatus, where the management apparatus is included in a cloud system, and the management apparatus includes:

> an obtaining unit, configured to obtain a plurality of groups of first samples and second samples of a target service channel, where a service capability of the target service channel matches a to-be-trained service model, the first sample includes a service quality parameter of a first historical periodicity, and the second sample includes a service quality parameter of a second historical periodicity after the first historical periodicity; and
> a processing unit, configured to train the service model based on the plurality of groups of first samples and second samples to obtain a quality prediction model, where the quality prediction model is used to predict a quality prediction result of an unstarted periodicity after a third historical periodicity based on a service quality parameter of the third historical periodicity.

In a possible implementation, there are a plurality of first historical periodicities.

In a possible implementation, the plurality of first historical periodicities are consecutive, and the plurality of first historical periodicities and the second historical periodicity are consecutive.

In a possible implementation, the obtaining unit is further configured to obtain a service quality parameter corresponding to each of the plurality of first service channels, where the plurality of first service channels are a subset or a universal set of the target service channel, and the service quality parameter is used to describe service quality of the corresponding first service channel in a first periodicity.

The processing unit is further configured to determine a quality prediction result of each first service channel in a second periodicity based on the service quality parameter corresponding to each first service channel and the quality prediction model, where the second periodicity is an unstarted periodicity after the first periodicity.

In a possible implementation, the quality prediction model is a model that uses a first relationship as an input and uses a second relationship as an output. The first relationship is a relationship between a first concurrency quantity of the first service channel in the first periodicity and successful delivery rates under different delays; and the second relationship is a relationship, predicted by the quality prediction model, between a second concurrency quantity of the first service channel in the second periodicity and successful delivery rates under different delays.

In a possible implementation, the processing unit is further configured to: after the second periodicity ends, optimize the quality prediction model based on a difference between actual service quality of each first service channel in the second periodicity and the quality prediction result.

A fifth aspect of this application provides a management apparatus. The management apparatus may include at least one processor, a memory, and a communication interface. The processor is coupled to the memory and the communication interface. The memory is configured to store instructions, the processor is configured to execute the instructions, and the communication interface is configured to communicate with another network element under control of the processor. When the instructions are executed by the processor, the processor is enabled to perform the method according to any one of the first aspect or the possible implementations of the first aspect.

A sixth aspect of this application provides a management apparatus. The management apparatus may include at least one processor, a memory, and a communication interface. The processor is coupled to the memory and the communication interface. The memory is configured to store instructions, the processor is configured to execute the instructions, and the communication interface is configured to communicate with another network element under control of the processor. When the instructions are executed by the processor, the processor is enabled to perform the method according to any one of the second aspect or the possible implementations of the second aspect.

A seventh aspect of this application provides a chip system. The chip system includes one or more interface circuits and one or more processors. The interface circuit and the processor are interconnected through a line. The interface circuit is configured to receive a signal from a memory of a management apparatus, and send the signal to the processor. The signal includes computer instructions stored in the memory. When the processor executes the computer instructions, the management apparatus performs the method according to any one of the first aspect or the possible implementations of the first aspect.

An eighth aspect of this application provides a chip system. The chip system includes one or more interface circuits and one or more processors. The interface circuit and the processor are interconnected through a line. The interface circuit is configured to receive a signal from a memory of a management apparatus, and send the signal to the processor. The signal includes computer instructions stored in the memory. When the processor executes the computer instructions, the management apparatus performs the method according to any one of the second aspect or the possible implementations of the second aspect.

A ninth aspect of this application provides a computer-readable storage medium, where the computer-readable storage medium stores a computer program or instructions. When the computer program or the instructions are run on a computer device, the computer device is enabled to perform the method according to any one of the first aspect or the possible implementations of the first aspect.

A tenth aspect of this application provides a computer-readable storage medium, where the computer-readable storage medium stores a computer program or instructions. When the computer program or the instructions are run on a computer device, the computer device is enabled to perform the method according to any one of the second aspect or the possible implementations of the second aspect.

An eleventh aspect of this application provides a computer device program product, where the computer device program product includes computer device program code. When the computer device program code is run on a computer device, the computer device is enabled to perform the method according to any one of the first aspect or the possible implementations of the first aspect.

A twelfth aspect of this application provides a computer device program product, where the computer device program product includes computer device program code. When the computer device program code is run on a computer device, the computer device is enabled to perform the method according to any one of the second aspect or the possible implementations of the second aspect.

A thirteenth aspect of this application provides a cloud system, including the foregoing management apparatus. The management apparatus is configured to perform the method according to any one of the first aspect or the possible implementations of the first aspect, or the management apparatus is configured to perform the method according to any one of the second aspect or the possible implementations of the second aspect.

A fourteenth aspect of this application provides a communication system, including a client, a cloud system, and a network system. The network system may include a plurality of service channels. The cloud system is configured to connect the client and the service channel. The cloud system is configured to perform the method according to any one of the first aspect or the possible implementations of the first aspect, or is configured to perform the method according to any one of the second aspect or the possible implementations of the second aspect.

For technical effects brought by any one of the third aspect to the fourteenth aspect or the possible implementations of the third aspect to the fourteenth aspect, refer to the technical effects brought by the first aspect or different possible implementations of the first aspect. Details are not described herein again.

## BRIEF DESCRIPTION OF DRAWINGS

FIG. 1A is a diagram of a structure of a communication system according to an embodiment of this application;

FIG. 1B is a diagram of a structure of a cloud system according to an embodiment of this application;

FIG. 2 is a diagram of a structure of a management apparatus according to an embodiment of this application;

FIG. 3A is a structural diagram of functions of a cloud communication platform according to an embodiment of this application;

FIG. 3B is another structural diagram of functions of a cloud communication platform according to an embodiment of this application;

FIG. 4 is a diagram of an embodiment of a service model training method according to embodiments of this application;

FIG. 5 is a diagram of an embodiment of a service channel management method according to embodiments of this application;

FIG. 6 is a diagram of a scenario of a service channel management method according to an embodiment of this application;

FIG. 7 is a diagram of another scenario of a service channel management method according to an embodiment of this application;

FIG. 8A is another structural diagram of functions of a cloud communication platform according to an embodiment of this application;

FIG. 8B is another structural diagram of functions of a cloud communication platform according to an embodiment of this application;

FIG. 9 is a diagram of a structure of a management apparatus according to an embodiment of this application; and

FIG. 10 is a diagram of another structure of a management apparatus according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "have", and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a service channel management method, to improve timeliness of monitoring service channel quality and reliability of a service channel. This application further provides a service model training method, a corresponding apparatus, a computer-readable storage medium, a computer program product, a cloud system, and the like. Details are separately described in the following.

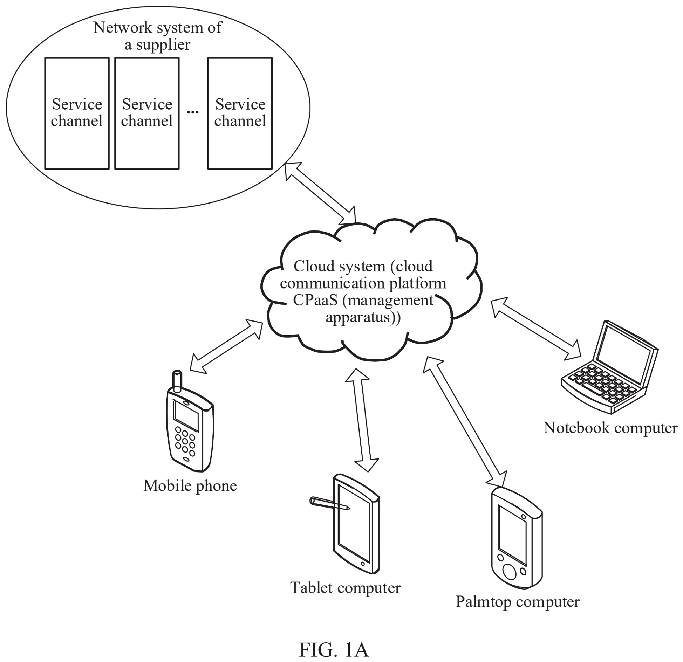

FIG. 1A is a diagram of an architecture of a communication system according to an embodiment of this application.

As shown in FIG. 1A, this embodiment of this application provides a communication system. The communication system includes a network system of a supplier, a cloud system, and a plurality of clients. The cloud system may also include a cloud communication platform (communications platform as a service (communications platform as a service, CPaaS)). The network system of the supplier may include a plurality of service channels, and different service channels may be provided for different types of services. For example: A service channel of a type A is suitable for an SMS service, a service channel of a type B is suitable for an education service, a service channel of a type C is suitable for a game service, and a service channel of a type D is suitable for a video service. These service channels may belong to network systems of a same supplier, or may belong to network systems of different suppliers. It should be noted that, service segmentation may also be performed on service channels of a same type, to provide differentiated services for customers. For example, a service channel of an A1 subtype is suitable for providing an SMS service of a fixed code number, and a service channel of an A2 subtype is suitable for providing an SMS service of an extension number.

The cloud communication platform may connect service channels of each supplier and a client. The cloud communication platform can manage service channels of each supplier, and schedule proper service channels for clients.

A management function of the cloud communication platform for the service channels may be implemented through a management apparatus. The management apparatus may manage the service channels of each supplier, and schedule the proper service channels for the clients. The management apparatus may also be referred to as a scheduling node, a cloud platform manager, or the like.

A function of the management apparatus may be implemented through software or hardware.

An example in which the management apparatus is a software functional unit is used, and the management apparatus may include code run on a compute instance. The compute instance may include at least one of a physical host (a computing device), a virtual machine, and a container. Further, there may be one or more compute instances. For example, the management apparatus may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs, where each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions, and interconnection between VPCs is implemented through the communication gateway.

An example in which the management apparatus is a hardware functional unit is used, and the management apparatus may include at least one computing device, such as a server. Alternatively, the management apparatus may be a device implemented through an application-specific integrated circuit (application-specific integrated circuit, ASIC) or a programmable logic device (programmable logic device, PLD), or the like. The PLD may be a complex programmable logical device (complex programmable logical device, CPLD), a field programmable gate array (field programmable gate array, FPGA), a generic array logic (generic array logic, GAL), or any combination thereof.

A plurality of computing devices included in the management apparatus may be distributed in a same region, or may be distributed in different regions. The plurality of computing devices included in the management apparatus may be distributed in a same AZ, or may be distributed in different AZs. Similarly, the plurality of computing devices included in the management apparatus may be distributed in a same VPC, or may be distributed in a plurality of VPCs. The plurality of computing devices may be any combination of computing devices such as a server, an ASIC, a PLD, a CPLD, an FPGA, and a GAL.

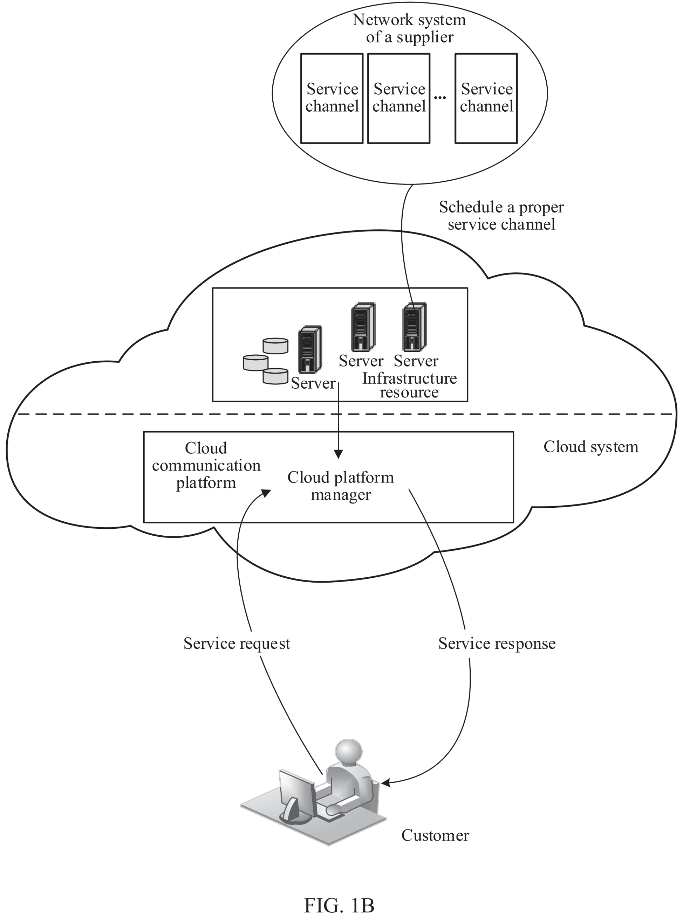

A cloud system provided in an embodiment of this application is shown in FIG. 1B. The cloud system includes a cloud communication platform and an infrastructure resource. The cloud communication platform includes a cloud platform manager, and the management apparatus in FIG. 1A may be the cloud platform manager in FIG. 1B. The infrastructure resource may include a plurality of servers.

The cloud platform manager can maintain customer information and basic service channel information, monitor and collect a service quality parameter of the service channel in a historical periodicity, and predict service quality of the service channel in a future periodicity based on the service quality parameter of the service channel in the historical periodicity, to obtain a quality prediction result. In this way, after receiving a service request from a client, the cloud platform manager can schedule a proper service channel for the service request based on a quality prediction result of the service channel in a future periodicity.

The client may be a terminal device, or may be software on the terminal device. The terminal device, also referred to as user equipment (user equipment, UE), a mobile station (mobile station, MS), a mobile terminal (mobile terminal, MT), or the like, is a device that includes a wireless communication function (providing voice/data connectivity for a user), for example, a hand-held device that has a wireless connection function. Currently, some examples of the terminal device include: a mobile phone (mobile phone), a tablet computer, a notebook computer, a palmtop computer, a notebook computer, a wireless router, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in an internet of vehicles, a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. For example, the wireless terminal in the internet of vehicles may be a vehicle-mounted device, an entire vehicle device, a vehicle-mounted module, a vehicle, or the like. The wireless terminal in industrial control may be a robot or the like. For example, the wireless terminal in self driving may be an uncrewed aerial vehicle.

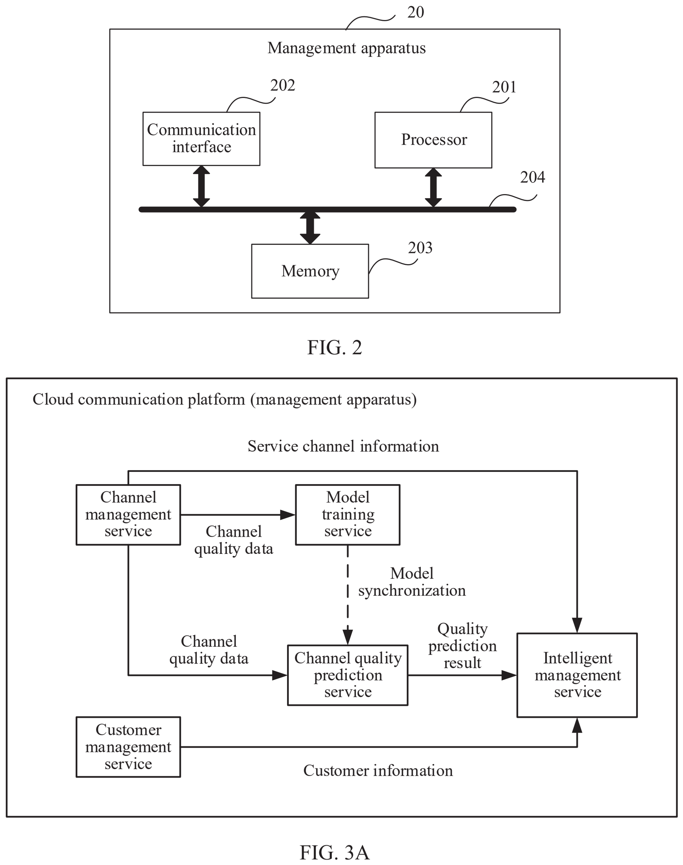

FIG. 2 is a diagram of a possible logical structure of a management apparatus according to an embodiment of this application. As shown in FIG. 2, the management apparatus 20 provided in this embodiment of this application includes: a processor 201, a communication interface 202, a memory 203, and a bus 204. The processor 201, the communication interface 202, and the memory 203 are interconnected through the bus 204. In this embodiment of this application, the processor 201 is configured to control and manage an action of the management apparatus 20. For example, the processor 201 is configured to perform a process of determining an audio advertisement. The communication interface 202 is configured to support the management apparatus 20 in performing communication. The memory 203 is configured to store program code and data of the management apparatus 20.

The processor 201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 204 may be a peripheral component interconnect (Peripheral Component Interconnect, PCI) bus or an extended industry standard architecture (Extended Industry Standard Architecture, EISA) bus, or the like. The bus may be classified as an address bus, a data bus, a control bus, and the like. For ease of representation, only one thick line is used to represent the bus in FIG. 2, but this does not mean that there is only one bus or only one type of bus.

The cloud communication platform (the management apparatus) in the foregoing cloud system may provide a corresponding service shown in FIG. 3A.

As a service architectural diagram of the cloud communication platform (the management apparatus) shown in FIG. 3A, the cloud communication platform (the management apparatus) can provide a channel management service, a customer management service, a model training service, a channel quality prediction service, and an intelligent management service.

The channel management service can be used to manage basic service channel information. The basic service channel information may include at least one of the following: a supplier name, an access account, a capability type, a code number capability, an extension bit length, a concurrency quantity, a sending quantity, a committed service level agreement (service level agreement, SLA), signature support, a sending range, a coverage area, complaint rate control, a stability level, mobile number portability support, and a capability price, and the like.

The customer management service can be used to manage customer information. The customer information may include at least one of the following: a sending account, a capability type, a customer level, a code number requirement, an extension bit length, a concurrency quantity, a sending quantity, a service SLA, a resending policy, a capability price, and the like.

The model training service can be used to train a service model based on quality data of a service channel, to obtain a quality prediction model. The quality data of the service channel may include the basic service channel information obtained from the channel management service, for example: a service type supported by the service channel, a supported concurrency quantity, an SLA, and service reliability. The quality data of the service channel may further include a service quality parameter of the service channel in a historical periodicity obtained from the channel management service, for example: a success rate, a concurrency quantity, and a delay of the service channel measured in minutes in a month. In addition, it should be noted that the model training service can be used to continuously optimize the quality prediction model based on a quality prediction result obtained through the channel quality prediction service and actual service quality after a periodicity corresponding to the quality prediction result ends.

The channel quality prediction service can be used to predict service quality of the service channel in a future periodicity with reference to a service quality parameter of the service channel in a historical periodicity. In a prediction process, the quality prediction model may be used for prediction, or the quality prediction model may not be used, and another algorithm is used for prediction. The service quality parameter in the historical periodicity may be a service quality parameter in one or more periodicities before a prediction moment.

The intelligent management service can be used to schedule a proper service channel for a service request of a customer or perform operation and maintenance management on the service channel based on the customer information, the basic service channel information, and the quality prediction result of the service channel predicted through the channel quality prediction service.

When the proper service channel is scheduled for the service request of the customer, an operation demand, such as a profit rate or a complaint rate, may further be considered.

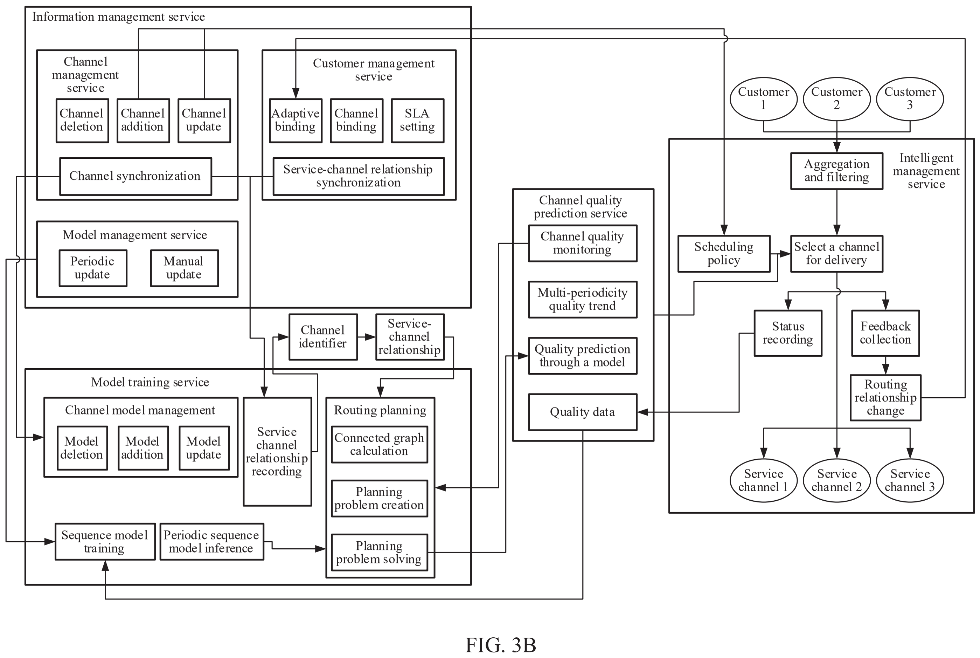

For the service architectural diagram of the cloud communication platform (the management apparatus), FIG. 3B may be further referred to for understanding. As shown in FIG. 3B, the cloud communication platform can provide an information management service, the model training service, the channel quality prediction service, and the intelligent management service.

The information management service may include the channel management service, the customer management service, and a model management service. The channel management service may include services such as channel deletion, channel addition, channel update, and channel synchronization. The customer management service may include adaptive binding, channel binding, SLA setting, service-channel relationship synchronization, and the like. The model management service may include services such as periodic model update and manual model update.

The model training service includes services such as channel model management, service channel relationship recording, routing planning, sequence model training, and periodic sequence model inference.

The channel model management service may include model deletion, model addition, and model update. When the channel synchronization service of the channel management service is used to provide synchronization information to the channel model management service, the channel model management service can be used to delete, add, or update the model.

The service channel relationship recording refers to recording a relationship between a service and a channel, and record information of the service channel relationship can be updated based on information about channel synchronization and service-channel relationship synchronization. The record information of the service channel relationship refers to a relationship between a channel identifier and a service, and a service-channel relationship is obtained. The service-channel relationship can be used for the routing planning, and the routing planning may include connected graph calculation, planning problem creation, and planning problem solving.

The periodic sequence model inference can be used for the planning problem solving.

The sequence model training can be used to train a model that is updated periodically or manually.

The channel quality prediction service can be used to monitor channel quality. A result of monitoring the channel quality can be used for the routing planning, and a result obtained by routing planning problem solving can be used to predict channel quality. In addition, in addition to that the channel quality is predicted using a model, the channel quality can alternatively be predicted based on a multi-periodicity trend.

The quality prediction result obtained through the channel quality prediction service and a scheduling policy in an intelligent scheduling service can be used to determine a service channel suitable for a service request of a customer, and schedule the corresponding service channel for the service request.

The intelligent scheduling service can be further used to perform aggregation and filtering on customers (for example, a customer 1, a customer 2, and a customer 3 in FIG. 3B), and determine a scheduling policy suitable for these customers. In addition, the scheduling policy in the intelligent scheduling service is further associated with an added channel and an updated channel. If a channel is added or a channel is updated, the scheduling policy may change.

The intelligent scheduling service can be used to record information related to a service channel or a customer, and perform data synchronization on the information for sequence model training.

The intelligent scheduling service is further used to record information related to routing relationship change, and notify an adaptive binding service of the information related to the routing relationship change. In this way, a customer can be bound to or unbound from a service channel.

The following describes a service model training method and a service channel management method with reference to the services provided by the cloud communication platform (the management apparatus). Management of a service channel may include predicting service quality of the service channel, and performing scheduling and operation and maintenance management on the service channel, which are separately described below.

I. Service model training.

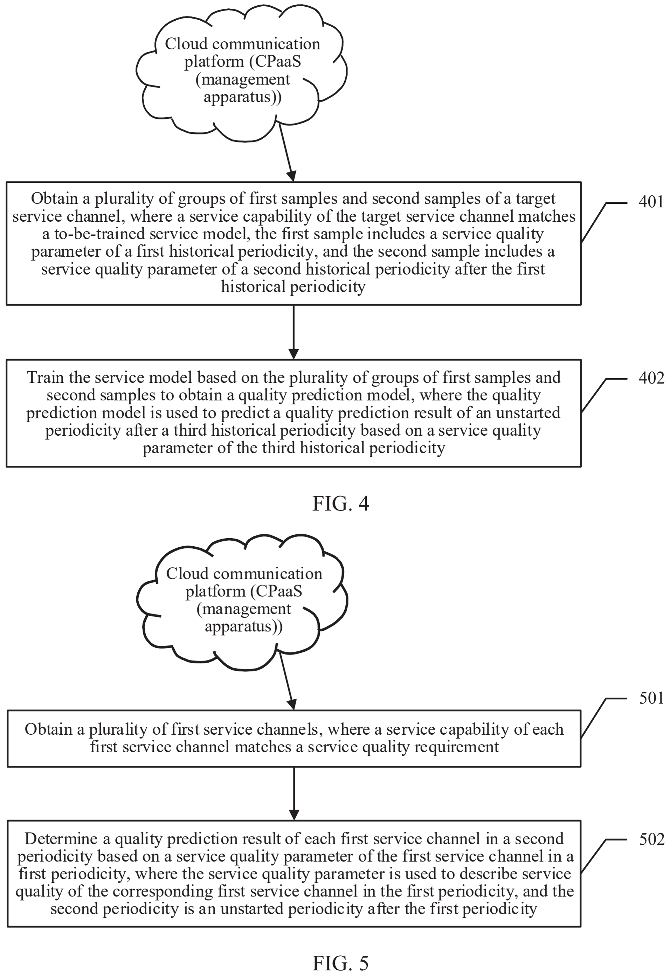

For an embodiment of the service model training method according to embodiments of this application, refer to FIG. 4 for understanding.

As shown in FIG. 4, an embodiment of the service model training method according to embodiments of this application may include the following steps.

401: A cloud communication platform (a management apparatus) obtains a plurality of groups of first samples and second samples of a target service channel, where a service capability of the target service channel matches a to-be-trained service model, the first sample includes a service quality parameter of a first historical periodicity, and the second sample includes a service quality parameter of a second historical periodicity after the first historical periodicity.

In this application, that a service capability of the target service channel matches a to-be-trained service model means that a service type supported by the target service channel is adapted to a structure and a parameter of a service model. For example, the target service channel supports an SMS service, and the service model is a model applicable to the SMS service.

In this application, the service quality parameter may include a concurrency quantity, a delay, a successful delivery rate, and the like. Certainly, the service quality parameter may further include an unknown rate or another parameter that can represent service quality.

An example in which the service quality parameter includes the concurrency quantity, the delay, and the successful delivery rate is used, and content included in the first sample may include a concurrency quantity, a delay, and a successful delivery rate of a historical periodicity 1, a concurrency quantity, a delay, and a successful delivery rate of a historical periodicity 2, ..., and a concurrency quantity, a delay, and a successful delivery rate of a historical periodicity N. The second sample includes a concurrency quantity, a delay, and a successful delivery rate of a historical periodicity N+1. N is generally an integer greater than 1, there may be a correspondence among the concurrency quantity, the delay, and the successful delivery rate, for example, a correspondence among successful delivery rates corresponding to a first concurrency quantity under different delays, and successful delivery rates corresponding to a same concurrency quantity under different delays are usually different.

Optionally, there are a plurality of first historical periodicities. The plurality of first historical periodicities are consecutive, and the plurality of first historical periodicities and the second historical periodicity are consecutive.

402: The cloud communication platform (the management apparatus) trains the service model based on the plurality of groups of first samples and second samples to obtain a quality prediction model, where the quality prediction model is used to predict a quality prediction result of an unstarted periodicity after a third historical periodicity based on a service quality parameter of the third historical periodicity.

In this application, the service model may be a service model that uses the correspondences among the concurrency quantities, the delays, and the successful delivery rates of N historical periodicities, namely, the historical periodicity 1, the historical periodicity 2, ..., and the historical periodicity N, as an input, and uses the concurrency quantity, the delay, and the successful delivery rate of the historical periodicity N+1 as an output. A weight in the service model can be trained using the foregoing input and output, to obtain the quality prediction model. The service model may be a long short-term memory (long short-term memory, LSTM) neural network model.

In this embodiment of this application, the cloud communication platform can train the service model by using a service quality parameter of a service channel in each historical periodicity, to obtain the quality prediction model used to predict service quality in a future periodicity.

It should be noted that the cloud communication platform can further continuously optimize the quality prediction model in a process of using the quality prediction model, so that a quality prediction result predicted by the quality prediction model is more accurate.

II. Service channel management.

1. Prediction of service quality of a service channel.

As shown in FIG. 5, an embodiment of a service channel management method according to embodiments of this application may include the following steps.

501: A cloud communication platform (a management apparatus) obtains a plurality of first service channels, where a service capability of each first service channel matches a service quality requirement.

In this application, the service quality requirement may be recorded in a customer order or a service agreement of the cloud communication platform for a customer, and the cloud communication platform may obtain the service quality requirement from the customer order or the service agreement. The service agreement may be a service agreement of a message type, for example, a short message service agreement or a service agreement of another type, for example, a service agreement of an artificial intelligence (artificial intelligence, AI) model processing type.

In this application, the service quality requirement may include a service level agreement (service level agreement, SLA). Certainly, the service quality requirement may further include other customer information, for example, at least one of a sending account, a capability type, a customer level, a code number requirement, an extension bit length, a concurrency quantity, a sending quantity, a resending policy, a capability price, and the like.

In step 501, the cloud communication platform determines the plurality of first service channels based on the service quality requirement proposed in the service agreement or the customer order and basic service channel information, where the basic service channel information may include at least one of a supplier name, an access account, a capability type, a code number capability, an extension bit length, a concurrency quantity, a sending quantity, a committed SLA, signature support, a sending range, a coverage area, complaint rate control, a stability level, mobile number portability support, a capability price, and the like.

In this application, that a service capability of each first service channel matches a service quality requirement means that each first service channel can meet the service quality requirement proposed in the service agreement or the customer order. For example, if the customer order indicates that a capability of sending short messages with a fixed code number and a concurrency quantity of not less than 1,000 needs to be provided, each first service channel supports a service of a short message type, and can support sending of short messages with the fixed code number and the concurrency quantity of not less than 1,000.

502: The cloud communication platform (the management apparatus) determines a quality prediction result of each first service channel in a second periodicity based on a service quality parameter of the first service channel in a first periodicity, where the service quality parameter is used to describe service quality of the corresponding first service channel in the first periodicity, and the second periodicity is an unstarted periodicity after the first periodicity.

In this application, the first periodicity is a period of time in history, and is a historical periodicity that has ended, and the second periodicity is a future period of time, that is, an unstarted periodicity.

In this application, the service quality parameter is a parameter, for example, a concurrency quantity, a delay, or a successful delivery rate, related to service quality of the service channel. Certainly, the service quality parameter may further include another parameter, for example, an unknown rate, that can represent service quality. The unknown rate indicates that no feedback message indicating a sending success or a sending failure is obtained, and service quality of a service channel with a high unknown rate is worse than service quality of a service channel with a low unknown rate.

In the solution provided in this application, the cloud communication platform can predict service quality of a service channel in an unstarted periodicity based on a service quality parameter of the service channel in a historical periodicity that has ended. In this way, a problem of the service channel can be sensed before a service channel failure. Therefore, timeliness of monitoring the service channel and reliability of the service channel are improved.

Optionally, there may be a plurality of first periodicities, so that accuracy of predicting a quality prediction result of the second periodicity can be improved.

Optionally, the plurality of first periodicities are consecutive, and the second periodicity and the plurality of first periodicities are consecutive. Prediction is performed based on service quality parameters of the plurality of consecutive first periodicities, so that the accuracy of predicting the quality prediction result of the second periodicity can be further improved.

There may be a plurality of manners for predicting the quality prediction result of the first service channel in the second periodicity. The following describes two manners: prediction by using a quality prediction model, and prediction by using a service quality trend in a historical periodicity, which are respectively described below.

Manner 1: Prediction by using a quality prediction model.

The cloud communication platform can perform prediction by using the quality prediction model obtained in the foregoing service model training process. A prediction process may be: determining a quality prediction result of each first service channel in the second periodicity based on a service quality parameter corresponding to the first service channel and the quality prediction model. The service quality parameter includes a first relationship of the first service channel in the first periodicity, and the first relationship is a relationship between a first concurrency quantity and successful delivery rates corresponding to the first concurrency quantity under different delays. The quality prediction model is a model that uses the first relationship as an input and uses a second relationship as an output, and the second relationship is a relationship between a second concurrency quantity in the second periodicity and successful delivery rates corresponding to the second concurrency quantity under different delays.

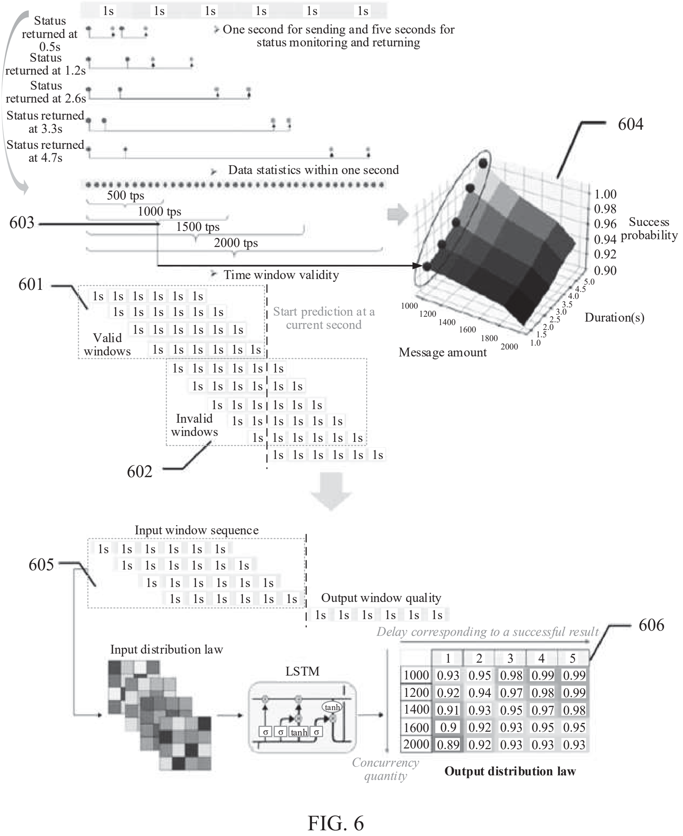

For an example of a scenario of the prediction process, refer to FIG. 6 for understanding. As shown in FIG. 6, the cloud communication platform can obtain complete time windows of first N first periodicities, and each first periodicity includes a plurality of time windows. Certainly, one time window may also be distributed in two consecutive first periodicities. The cloud communication platform can select a valid window in the N first periodicities, and remove an invalid window. For the valid window and the invalid window, refer to valid windows 601 and invalid windows 602 in FIG. 6 for understanding. In the scenario shown in FIG. 6, one second (s) for sending and future five seconds for status monitoring and returning are one time window. In this scenario, one-second sending and future five-second monitoring and returning are a complete time window. In the complete time window, a window in which a concurrency quantity is excessively small or a sending quantity does not meet a requirement (where, for example, a time window in which a concurrency quantity is 1,000 (transaction per second, tps) is selected in FIG. 6) is excluded, and other time windows are valid windows. In addition, in an incomplete time window or a complete time window, a time window in which a concurrency quantity is excessively small or a sending quantity does not meet a requirement is an invalid window.

In the foregoing FIG. 6, five seconds of monitoring and returning may be understood as five delays, which are respectively a one-second delay, a two-second delay, a three-second delay, a four-second delay, and a five-second delay. Quantities of returned statuses monitored under different delays are different, that is, quantities of sending successes are different. For example, in a message 604 part shown in FIG. 6, when a same concurrency quantity (message amount) corresponds to different delays (durations), successful delivery rates (success probabilities) are different. A successful delivery rate is graded by a delay, and this indicator is closely related to a concurrency quantity and a delay. It can be understood that a smaller concurrency quantity and a longer delay indicate a higher rate of obtaining a success status, and a larger concurrency quantity and a shorter delay indicate a lower rate of obtaining a success status.

For example, in a 605 part in FIG. 6, actual quality of valid windows is used as an input window sequence and the input window sequence is converted into a vector, to obtain an input distribution law, and the input distribution law is input into a quality prediction model (LSTM), to obtain output window quality. The output window quality is a quality prediction result of the second periodicity. The quality prediction result may be successful delivery rates corresponding to different concurrency quantities under different delays.

As shown in a table in a 606 part in FIG. 6:

When a concurrency quantity is 1,000 tps, a successful delivery rate corresponding to the one-second delay is 0.93, a successful delivery rate corresponding to the two-second delay is 0.95, a successful delivery rate corresponding to the three-second delay is 0.98, a successful delivery rate corresponding to the four-second delay is 0.99, and a successful delivery rate corresponding to the five-second delay is 0.99.

When a concurrency quantity is 1,200 tps, a successful delivery rate corresponding to the one-second delay is 0.92, a successful delivery rate corresponding to the two-second delay is 0.94, a successful delivery rate corresponding to the three-second delay is 0.97, a successful delivery rate corresponding to the four-second delay is 0.98, and a successful delivery rate corresponding to the five-second delay is 0.99.

When a concurrency quantity is 1,400 tps, a successful delivery rate corresponding to the one-second delay is 0.91, a successful delivery rate corresponding to the two-second delay is 0.93, a successful delivery rate corresponding to the three-second delay is 0.95, a successful delivery rate corresponding to the four-second delay is 0.97, and a successful delivery rate corresponding to the five-second delay is 0.98.

When a concurrency quantity is 1,600 tps, a successful delivery rate corresponding to the one-second delay is 0.9, a successful delivery rate corresponding to the two-second delay is 0.92, a successful delivery rate corresponding to the three-second delay is 0.93, a successful delivery rate corresponding to the four-second delay is 0.95, and a successful delivery rate corresponding to the five-second delay is 0.95.

When a concurrency quantity is 2,000 tps, a successful delivery rate corresponding to the one-second delay is 0.89, a successful delivery rate corresponding to the two-second delay is 0.92, a successful delivery rate corresponding to the three-second delay is 0.93, a successful delivery rate corresponding to the four-second delay is 0.93, and a successful delivery rate corresponding to the five-second delay is 0.93.

It can be seen from the foregoing quality prediction result that, if a success rate under the two-second delay expected to be obtained for the first service channel in a future periodicity is 94%, a concurrency quantity may be maintained between 1,000 tps and 1,200 tps. If n messages are sent through the first service channel in one second, a successful delivery rate in t seconds may be represented as $p(n, t)$, where n is a concurrency quantity, and t is a delay expected for success. It can be determined based on a relationship between a concurrency quantity, a delay, and successful delivery rates under different delays of the quality prediction model that, as long as values of any two of the three parameters are determined, a recommended value of the third parameter can be obtained.

It should be noted that the foregoing quality prediction model is only described using a relationship between a concurrency quantity, a delay, and a successful delivery rate as an example. Actually, there may be a plurality of types of parameters in the quality prediction model, to meet different requirements of different customers.

In addition, in a process of actually using the quality prediction model, the quality prediction model may be further continuously optimized. A process may be: after the second periodicity ends, optimizing the quality prediction model based on a difference between actual service quality of each first service channel in the second periodicity and the quality prediction result. In this way, accuracy of subsequent service quality prediction can be improved.

Manner 2: Prediction by using a service quality trend in a historical periodicity.

In this embodiment of this application, a process in which the cloud communication platform determines the quality prediction result of each first service channel in the second periodicity may alternatively be: determining the quality prediction result of each first service channel in the second periodicity based on a service quality change trend in a plurality of first periodicities of the first service channel.

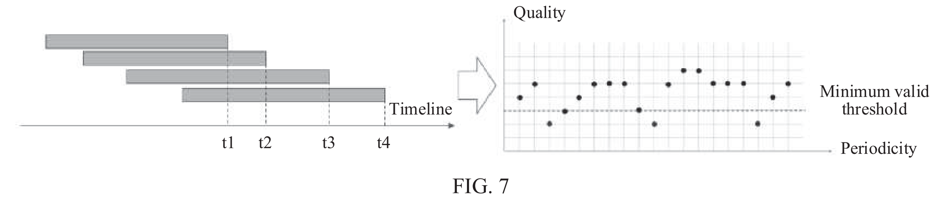

The process may be understood with reference to FIG. 7. As shown in FIG. 7, the cloud communication platform continuously monitors service quality of the first service channel in four first periodicities from t1 to t4, for example, successful delivery rates corresponding to a same delay, and then derives a successful delivery rate in a $5^{th}$ periodicity, that is, a successful delivery rate in the second periodicity under the delay, based on the delay or a fluctuation trend of the successful delivery rates in the four first periodicities. In FIG. 7, the cloud communication platform can remove data in a time window lower than a minimum valid threshold, and perform prediction by using data in a time window higher than the minimum valid threshold.

If the cloud communication platform continuously monitors service quality of the first service channel in n first periodicities from t1 to tn, service quality in an $(n+1)^{th}$ periodicity may be obtained.

In this embodiment of this application, the cloud communication platform performs quality prediction by using actively monitored service channel quality as a data source, data does not need to be additionally fed back by a customer or a service channel of a supplier, and costs of accessing the platform by the customer and integrating suppliers are not increased.

In this embodiment of this application, after predicting the quality prediction result of the service channel, the cloud communication platform can perform scheduling or operation and maintenance management on the service channel based on the quality prediction result of the service channel. The following describes a scheduling process or an operation and maintenance management process.

2. Scheduling or operation and maintenance management of the service channel.

2.1. Scheduling of the service channel.

The cloud communication platform can schedule a second service channel for a service request based on the quality prediction result of each first service channel in the second periodicity, where the second service channel is a first service channel whose service quality indicated by a quality prediction result exceeds a first quality threshold. In this way, service quality for the service request can be improved.

The service request is from a client using a service agreement, and the service agreement includes a service quality requirement.

When scheduling the second service channel, in addition to the quality prediction result, the cloud communication platform can further schedule a service channel with a highest scheduling ranking with reference to a scheduling ranking, where the second service channel may be a service channel with a highest scheduling ranking in first service channels whose service quality exceeds a quality threshold. The scheduling ranking is associated with a scheduling policy, and the scheduling policy is used to describe a scheduling priority principle.

In this embodiment of this application, there may be a plurality of types of scheduling policies, for example, a very important person (very important person, VIP) policy, a bidding policy, and a comprehensive policy. The scheduling policies may be recorded in the customer order or the service agreement. The VIP policy may describe preferential scheduling of a service channel with best quality. The bidding policy may describe preferential scheduling of a service channel with a most proper price. The comprehensive policy may describe preferential scheduling of a service channel with highest cost performance. The scheduling policy may affect the scheduling ranking. When scheduling a service channel for a service request, the cloud communication platform considers not only service quality of the service channel, but also the scheduling ranking. In this way, most proper service channels can be scheduled for customers with different requirements, thereby improving accuracy of service channel scheduling.

In this embodiment of this application, a score used to determine the scheduling ranking is determined based on a scheduling factor in a scheduling score relational expression and a weight corresponding to the scheduling factor, and weights corresponding to scheduling factors in scheduling score relational expressions corresponding to different scheduling policies are different.

In this embodiment of this application, the scheduling score relational expression is a relational expression used to determine a scheduling score, the scheduling score relational expression includes a plurality of scheduling factors, and each scheduling factor has a corresponding weight. The scheduling factor may include at least one of channel quality (a delay and a successful delivery rate), channel costs, a channel capacity (a concurrency quantity and a message amount), a complaint rate threshold, and the like. The scheduling factors in the scheduling score relational expressions corresponding to the different scheduling policies may be the same, but the weights corresponding to the scheduling factors are not completely the same.

For example, the VIP policy means that a customer-oriented scheduling factor such as a customer SLA (a success rate, a delay, and the like) has a high weight, while an operation-oriented scheduling factor such as use costs or profits has a low weight.

The bidding policy means that a customer-oriented scheduling factor such as a customer SLA has a low weight, while an operation-oriented scheduling factor such as use costs or profits has a high weight.

The comprehensive policy means that weights of scheduling factors such as a customer SLA, use costs, and operation profits are moderate.

In this way, for different scheduling policies, different scheduling scores may be obtained for a same service channel, and scheduling rankings of the service channel are also different. In this way, for customers that need different scheduling policies, service channels most suitable for the customers can be scheduled.

In this embodiment of this application, the scheduling score relational expression may be understood with reference to the following relational expression:

$$R=\text{SUM}(\text{rank}(\text{factor}(1))*w(\text{factor}(1)) \ldots\ldots \text{rank}(\text{factor}(n))*w(\text{factor}(n))).$$

R indicates a scheduling score, rank(factor(n)) indicates a scheduling factor, and w(factor(n)) indicates a weight of the scheduling factor.

Usually, a higher scheduling score of a service channel indicates a lower ranking, and a lower score indicates a higher ranking. Alternatively, a higher score may indicate a higher ranking, and a lower score indicates a lower ranking. This is not limited in this application.

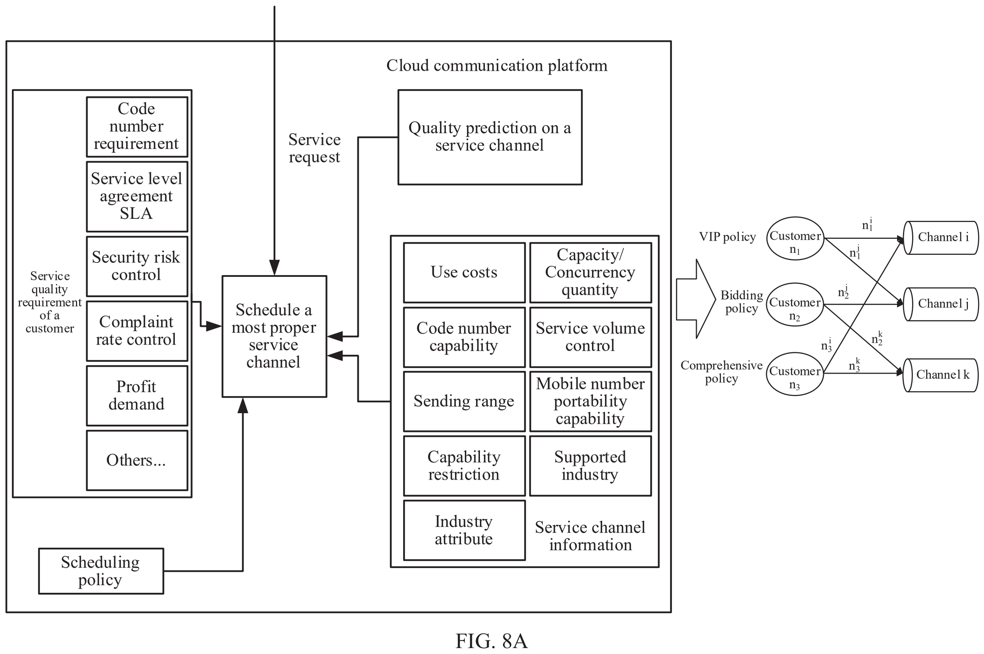

In general, in this embodiment of this application, the cloud communication platform can schedule a proper service channel for a service request of a customer with reference to a service quality requirement of the customer, a quality prediction result of a service channel, basic service channel information, and a scheduling policy, where the service quality requirement of the customer and the scheduling policy may be synthesized into a service objective. This process may be understood with reference to FIG. 8A.

As shown in FIG. 8A, after receiving a service request, the cloud communication platform can obtain a corresponding service quality requirement and basic service channel information based on a service agreement or a customer order to which the service request belongs. The service quality requirement may include a code number requirement, a service level agreement, security risk control, complaint rate control, a profit demand, and the like. The basic service channel information may include use costs, a capacity/concurrency quantity, capability restriction, a code number capability, service volume control, a supported industry, a sending range, a mobile number portability capability, an industry attribute, and the like.

The cloud communication platform can perform quality prediction on the service channel by using the foregoing different manners for performing quality prediction on a service channel, to obtain a quality prediction result, and then select a most proper service channel for the service request with reference to the quality prediction result and a scheduling policy.

For a process of selecting the most proper service channel for the service request by using the quality prediction result and the scheduling policy, refer to the foregoing descriptions for understanding. As shown in FIG. 8A, a channel i or a channel j is scheduled for a customer $n_1$ according to the VIP policy, the channel j or a channel k is scheduled for a customer $n_2$ according to the bidding policy, and the channel i or the channel k is scheduled for a customer $n_3$ according to the comprehensive policy.

In this embodiment of this application, a condition for scheduling a service channel may also be summarized as a limiting condition and a scheduling factor. In a plurality of service channels that meet the limiting condition, scores of the service channels are determined based on the scheduling factor, so that rankings of the service channels are determined, and the most proper service channel for the service request is scheduled. The limiting condition may be a minimum requirement, for example, the code number capability (a length or an extension bit), a target area (a province or a city), a home carrier (China Mobile, China Telecom, and China Unicom), the industry attribute (finance, education, government and enterprise, or the like), or mobile number portability support, for meeting a customer service demand.

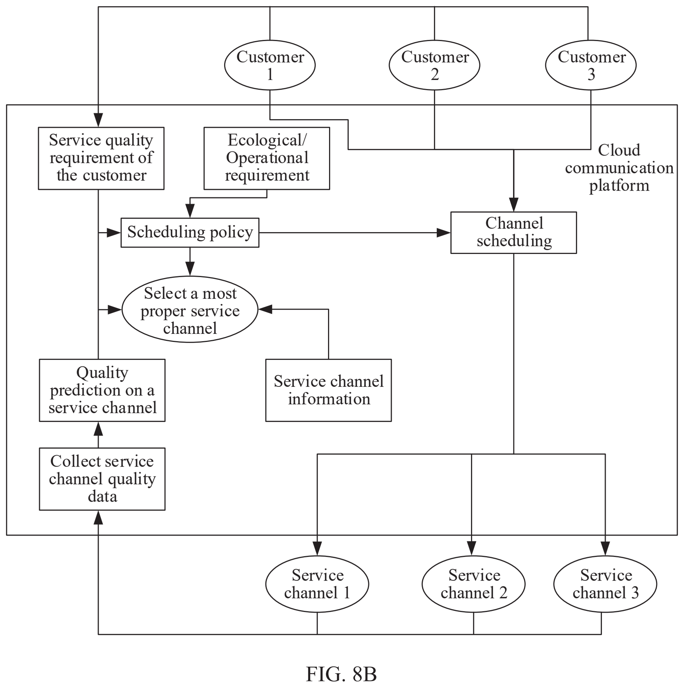

For the process of scheduling the most proper service channel for the service request, further refer to FIG. 8B for understanding. The cloud communication platform maintains basic service channel information (basic service channel information) of each service channel, and a service quality requirement of a customer order. The cloud communication platform can determine a scheduling policy with reference to an ecological/operational requirement and a customer requirement.

The cloud communication platform can collect service channel quality data, where the service channel quality data refers to data of service quality of the service channel in a historical periodicity. The cloud communication platform can predict service quality of the service channel based on the service quality requirement of the customer, the basic service channel information, and the data of the service quality of the service channel in the historical periodicity, to obtain a quality prediction result of the service channel. Then, the service channel most suitable for the service request is selected based on the quality prediction result and the scheduling policy, and the service channel most suitable for the service request is scheduled for the corresponding customer, to complete transmission of the service request.

In this embodiment of this application, the cloud communication platform can improve a capability of operating a service channel. Each time a service is used, a channel with best quality is no longer simply selected, but different scheduling policies are provided, to flexibly meet an operation demand and increase profits.

2.2. Operation and maintenance management of the service channel.

The cloud communication platform can perform operation and maintenance management on a third service channel based on the quality prediction result of each first service channel in the second periodicity, where the third service channel is a first service channel whose service quality indicated by a quality prediction result is lower than a second quality threshold.

In this embodiment of this application, the second quality threshold may be equal to or not equal to the first quality threshold. This is not limited in this application.

When the service channel in the second periodicity is predicted to be poor, it indicates that the quality of the service channel is about to deteriorate. In this case, intervention may be performed in advance through a measure such as alarm, shutdown, or manual switching, to ensure that user-oriented service quality is not affected.

In addition, in this embodiment of this application, the cloud communication platform can further provide an interaction interface, to display scoring statuses of each service channel under different scheduling policies, so that customers can select different scheduling policies based on operation requirements of the customers. The cloud communication platform can also provide a view interface, to provide a customer with a sending suggestion on "a low delay and a high success rate", that is, a sending rate used to more easily achieve "a low delay success" in a future period of time.

It can be learned from the foregoing described solution that, in a quality prediction solution of the service channel provided in this embodiment of this application, a service channel failure can be predicted in advance. In this way, the operation and maintenance management can be performed on the service channel in advance, and a service is switched to a secure service channel, so that service reliability can be improved.

The foregoing describes the service channel management method and the service model training method. The following describes a management apparatus in embodiments of this application with reference to the accompanying drawings.

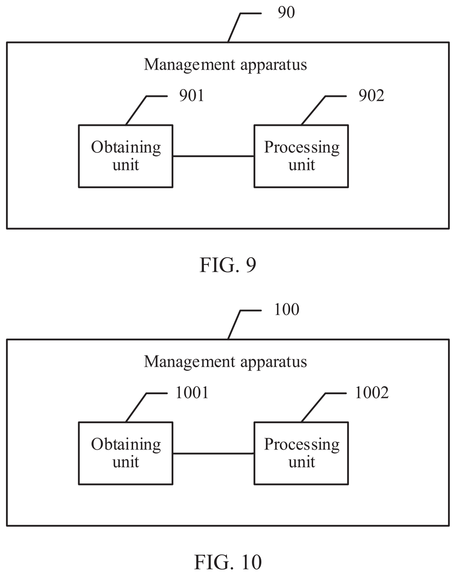

As shown in FIG. 9, a structure of a management apparatus 90 according to an embodiment of this application includes:

an obtaining unit 901, configured to obtain a plurality of first service channels, where a service capability of each first service channel matches a service quality requirement, and the obtaining unit 901 can perform step 501 in the foregoing method embodiments; and
a processing unit 902, configured to determine a quality prediction result of each first service channel in a second periodicity based on a service quality parameter of the first service channel in a first periodicity, where the service quality parameter is used to describe service quality of the corresponding first service channel in the first periodicity, the second periodicity is an unstarted periodicity after the first periodicity, and the processing unit 902 can perform step 502 in the foregoing method embodiments.

Optionally, a second service channel is scheduled for a service request, and the second service channel is a first service channel whose service quality indicated by a quality prediction result exceeds a first quality threshold; and the service request is from a client using a service agreement, and the service agreement includes the service quality requirement.

Optionally, the second service channel is a service channel with a highest scheduling ranking in first service channels whose service quality indicated by quality prediction results exceeds the first quality threshold, a scheduling ranking is associated with a scheduling policy, and the scheduling policy is used to describe a scheduling priority principle.

Optionally, a score used to determine the scheduling ranking is determined based on a scheduling factor in a scheduling score relational expression and a weight corresponding to the scheduling factor, and weights corresponding to scheduling factors in scheduling score relational expressions corresponding to different scheduling policies are different.

Optionally, the processing unit 902 is further configured to perform operation and maintenance management on a third service channel, where the third service channel is a first service channel whose service quality indicated by a quality prediction result is lower than a second quality threshold.

Optionally, there are a plurality of first periodicities.

Optionally, the plurality of first periodicities are consecutive, and the second periodicity and the plurality of first periodicities are consecutive.

Optionally, the quality prediction result is obtained through a quality prediction model, and the quality prediction model is a model that uses, as an input, a first relationship used to describe service quality in the first periodicity, and uses, as an output, a second relationship used to describe service quality in the second periodicity. The first relationship is a relationship between a first concurrency quantity of the first service channel in the first periodicity and successful delivery rates under different delays; and the second relationship is a relationship, predicted by the quality prediction model, between a second concurrency quantity of the first service channel in the second periodicity and successful delivery rates under different delays.

Optionally, the quality prediction result is obtained through a service quality change trend indicated by service quality parameters of the plurality of first periodicities.

Optionally, the processing unit 902 is further configured to: after the second periodicity ends, optimize the quality prediction model based on a difference between actual service quality of each first service channel in the second periodicity and the quality prediction result.

In this embodiment of this application, operations performed by units in the management apparatus 90 are similar to those described in the embodiments shown in FIG. 3A to FIG. 8B. Details are not described herein again.

As shown in FIG. 10, a structure of a management apparatus 100 according to an embodiment of this application includes:

an obtaining unit 1001, configured to obtain a plurality of groups of first samples and second samples of a target service channel, where a service capability of the target service channel matches a to-be-trained service model, the first sample includes a service quality parameter of a first historical periodicity, the second sample includes a service quality parameter of a second historical periodicity after the first historical periodicity, and the obtaining unit 1001 can perform step 401 in the foregoing method embodiments; and

a processing unit 1002, configured to train the service model based on the plurality of groups of first samples and second samples to obtain a quality prediction model, where the quality prediction model is used to predict a quality prediction result of an unstarted periodicity after a third historical periodicity based on a service quality parameter of the third historical periodicity, and the processing unit 1002 can perform step 402 in the foregoing method embodiments.

Optionally, there are a plurality of first historical periodicities

Optionally, the plurality of first historical periodicities are consecutive, and the plurality of first historical periodicities and the second historical periodicity are consecutive.

Optionally, the obtaining unit 1001 is further configured to obtain a service quality parameter corresponding to each of the plurality of first service channels, where the plurality of first service channels are a subset or a universal set of the target service channel, and the service quality parameter is used to describe service quality of the corresponding first service channel in a first periodicity.

Optionally, the processing unit 1002 is further configured to determine a quality prediction result of each first service channel in a second periodicity based on the service quality parameter corresponding to each first service channel and the quality prediction model, where the second periodicity is an unstarted periodicity after the first periodicity.

Optionally, the quality prediction model is a model that uses a first relationship as an input and uses a second relationship as an output. The first relationship is a relationship between a first concurrency quantity of the first service channel in the first periodicity and successful delivery rates under different delays; and the second relationship is a relationship, predicted by the quality prediction model, between a second concurrency quantity of the first service channel in the second periodicity and successful delivery rates under different delays.

Optionally, the processing unit 1002 is further configured to: after the second periodicity ends, optimize the quality prediction model based on a difference between actual service quality of each first service channel in the second periodicity and the quality prediction result.

In this embodiment of this application, operations performed by units in the management apparatus 100 are similar to those described in the embodiments shown in FIG. 3A to FIG. 8B. Details are not described herein again.

In another embodiment of this application, a computer-readable storage medium is further provided. The computer-readable storage medium stores computer-executable instructions. When a processor of a management apparatus executes the computer-executable instructions, the management apparatus performs the steps of service channel management performed by the cloud communication platform (the management apparatus) in FIG. 3A to FIG. 8B.

In another embodiment of this application, a computer-readable storage medium is further provided. The computer-readable storage medium stores computer-executable instructions. When a processor of a management apparatus executes the computer-executable instructions, the management apparatus performs the steps of service model training performed by the cloud communication platform (the management apparatus) in FIG. 3A to FIG. 8B.

In another embodiment of this application, a computer program product is further provided. The computer program product includes computer program code. When the computer program code is executed on a computer device, the computer device performs the steps of service channel management performed by the cloud communication platform (the management apparatus) in FIG. 3A to FIG. 8B.

In another embodiment of this application, a computer program product is further provided. The computer program product includes computer program code. When the computer program code is executed on a computer, the computer device performs the steps of service model training performed by the cloud communication platform (the management apparatus) in FIG. 3A to FIG. 8B.

In another embodiment of this application, a chip system is further provided. The chip system includes one or more interface circuits and one or more processors. The interface circuit and the processor are interconnected through a line. The interface circuit is configured to receive a signal from a memory of a management apparatus, and send the signal to the processor. The signal includes computer instructions stored in the memory. When the processor executes the computer instructions, the management apparatus performs the steps of service channel management performed by the cloud communication platform (the management apparatus) in FIG. 3A to FIG. 8B. In a possible design, the chip system further includes a memory. The memory is configured to store program instructions and data that are necessary for a control device. The chip system may include a chip, or may include a chip and another discrete component.

In another embodiment of this application, a chip system is further provided. The chip system includes one or more interface circuits and one or more processors. The interface circuit and the processor are interconnected through a line. The interface circuit is configured to receive a signal from a memory of a management apparatus, and send the signal to the processor. The signal includes computer instructions stored in the memory. When the processor executes the computer instructions, the management apparatus performs the steps of service model training performed by the cloud communication platform (the management apparatus) in FIG. 3A to FIG. 8B. In a possible design, the chip system further includes a memory. The memory is configured to store program instructions and data that are necessary for a control device. The chip system may include a chip, or may include a chip and another discrete component.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate components may or may not be physically separated, and the components displayed as units may or may not be physical units, and may be located in one place or may be distributed over a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. All or some of the integrated units may be implemented by using software, hardware, firmware, or any combination thereof.

When software is used to implement the integrated units, all or some of the integrated units may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

## Claims

1. A service channel management method, wherein the method is applied to a cloud system, and the method comprises:

   obtaining a plurality of first service channels, wherein a service capability of each first service channel matches a service quality requirement; and
   determining a quality prediction result of each first service channel in a second periodicity based on a service quality parameter of the first service channel in a first periodicity, wherein the service quality parameter is used to describe service quality of the corresponding first service channel in the first periodicity, and the second periodicity is an unstarted periodicity after the first periodicity.

2. The method according to claim 1, wherein a second service channel is scheduled for a service request, and the second service channel is a first service channel whose service quality indicated by the quality prediction result exceeds a first quality threshold.

3. The method according to claim 2, wherein the service request is from a client using a service agreement, and the service agreement comprises the service quality requirement.

4. The method according to claim 2 or 3, wherein the second service channel is a service channel with a highest scheduling ranking in first service channels whose service quality indicated by the quality prediction results exceeds the first quality threshold, a scheduling ranking is associated with a scheduling policy, and the scheduling policy is used to describe a scheduling priority principle.

5. The method according to claim 4, wherein a score used to determine the scheduling ranking is determined based on a scheduling factor in a scheduling score relational expression and a weight corresponding to the scheduling factor, and weights corresponding to scheduling factors in scheduling score relational expressions corresponding to different scheduling policies are different.

6. The method according to claim 1, wherein the method further comprises:
   performing operation and maintenance management on a third service channel, wherein the third service channel is a first service channel whose service quality indicated by the quality prediction result is lower than a second quality threshold.

7. The method according to any one of claims 1 to 6, wherein there are a plurality of first periodicities.

8. The method according to claim 7, wherein the plurality of first periodicities are consecutive, and the second periodicity and the plurality of first periodicities are consecutive.

9. The method according to any one of claims 1 to 8, wherein the quality prediction result is obtained through a quality prediction model, and the quality prediction model is a model that uses a first relationship as an input and uses a second relationship as an output, wherein

   the first relationship is a relationship between a first concurrency quantity of the first service channel in the first periodicity and successful delivery rates under different delays; and
   the second relationship is a relationship, predicted by the quality prediction model, between a second concurrency quantity of the first service channel in the second periodicity and successful delivery rates under different delays.

10. The method according to claim 8, wherein the quality prediction result is obtained through a service quality change trend indicated by service quality parameters of the plurality of first periodicities.

11. The method according to claim 9, wherein the method further comprises:
    after the second periodicity ends, optimizing the quality prediction model based on a difference between actual service quality of each first service channel in the second periodicity and the quality prediction result.

**12.** A management apparatus, wherein the management apparatus is comprised in a cloud system, and the management apparatus comprises:

an obtaining unit, configured to obtain a plurality of first service channels, wherein a service capability of each first service channel matches a service quality requirement; and

a processing unit, configured to determine a quality prediction result of each first service channel in a second periodicity based on a service quality parameter of the first service channel in a first periodicity, wherein the service quality parameter is used to describe service quality of the corresponding first service channel in the first periodicity, and the second periodicity is an unstarted periodicity after the first periodicity.

**13.** The management apparatus according to claim 12, wherein a second service channel is scheduled for a service request, and the second service channel is a first service channel whose service quality indicated by the quality prediction result exceeds a first quality threshold; and

the service request is from a client using a service agreement, and the service agreement comprises the service quality requirement.

**14.** The management apparatus according to claim 13, wherein the second service channel is a service channel with a highest scheduling ranking in first service channels whose service quality indicated by the quality prediction results exceeds the first quality threshold, a scheduling ranking is associated with a scheduling policy, and the scheduling policy is used to describe a scheduling priority principle.

**15.** The management apparatus according to claim 14, wherein a score used to determine the scheduling ranking is determined based on a scheduling factor in a scheduling score relational expression and a weight corresponding to the scheduling factor, and weights corresponding to scheduling factors in scheduling score relational expressions corresponding to different scheduling policies are different.

**16.** The management apparatus according to claim 12, wherein

the processing unit is further configured to perform operation and maintenance management on a third service channel, wherein the third service channel is a first service channel whose service quality indicated by the quality prediction result is lower than a second quality threshold.

**17.** The management apparatus according to any one of claims 12 to 16, wherein there are a plurality of first periodicities.

**18.** The management apparatus according to claim 17, wherein the plurality of first periodicities are consecutive, and the second periodicity and the plurality of first periodicities are consecutive.

**19.** The management apparatus according to any one of claims 12 to 18, wherein the quality prediction result is obtained through a quality prediction model, and the quality prediction model is a model that uses, as an input, a first relationship used to describe service quality in the first periodicity, and uses, as an output, a second relationship used to describe service quality in the second periodicity;

the first relationship is a relationship between a first concurrency quantity of the first service channel in the first periodicity and successful delivery rates under different delays; and

the second relationship is a relationship, predicted by the quality prediction model, between a second concurrency quantity of the first service channel in the second periodicity and successful delivery rates under different delays.

**20.** The management apparatus according to claim 18, wherein the quality prediction result is obtained through a service quality change trend indicated by service quality parameters of the plurality of first periodicities.

**21.** The management apparatus according to claim 19, wherein

the processing unit is further configured to: after the second periodicity ends, optimize the quality prediction model based on a difference between actual service quality of each first service channel in the second periodicity and the quality prediction result.

**22.** A management apparatus, comprising a communication interface, a processor, and a memory, wherein the communication interface and the processor are coupled to the memory, the memory is configured to store a program or instructions, and when the program or the instructions are executed by the processor, the management apparatus is enabled to perform the method according to any one of claims 1 to 11.

23. A computer-readable storage medium, wherein the computer-readable storage medium stores instructions, and when the instructions are run on a computer device, the computer device is enabled to perform the method according to any one of claims 1 to 11.

24. A computer program product, wherein the computer program product comprises computer program code, and when the computer program code is run on a computer device, the computer device is enabled to perform the method according to any one of claims 1 to 11.

25. A cloud system, comprising a management apparatus configured to perform the method according to any one of claims 1 to 11.

FIG. 1A

FIG. 1B

FIG. 2

FIG. 3A

FIG. 3B

Cloud communication
platform (CPaaS
(management
apparatus))

Obtain a plurality of groups of first samples and second samples of a target
service channel, where a service capability of the target service channel matches
a to-be-trained service model, the first sample includes a service quality
parameter of a first historical periodicity, and the second sample includes a
service quality parameter of a second historical periodicity after the first
historical periodicity ⎯ 401

Train the service model based on the plurality of groups of first samples and
second samples to obtain a quality prediction model, where the quality
prediction model is used to predict a quality prediction result of an unstarted
periodicity after a third historical periodicity based on a service quality
parameter of the third historical periodicity ⎯ 402

FIG. 4

Cloud communication
platform (CPaaS
(management
apparatus))

Obtain a plurality of first service channels, where a service capability of each
first service channel matches a service quality requirement ⎯ 501

Determine a quality prediction result of each first service channel in a second
periodicity based on a service quality parameter of the first service channel in a
first periodicity, where the service quality parameter is used to describe service
quality of the corresponding first service channel in the first periodicity, and the
second periodicity is an unstarted periodicity after the first periodicity ⎯ 502

FIG. 5

FIG. 6

FIG. 7

EP 4 645 805 A1

Cloud communication platform

Code number requirement

Service level agreement SLA

Security risk control

Complaint rate control

Profit demand

Others...

Service quality requirement of a customer

Service request

Schedule a most proper service channel

Scheduling policy

Quality prediction on a service channel

Use costs

Capacity/ Concurrency quantity

Code number capability

Service volume control

Sending range

Mobile number portability capability

Capability restriction

Supported industry

Industry attribute

Service channel information

VIP policy

Bidding policy

Comprehensive policy

Customer $n_1$

Customer $n_2$

Customer $n_3$

$n_1^i$

$n_1^j$

$n_2^j$

$n_3^i$

$n_2^k$

$n_3^k$

Channel i

Channel j

Channel k

FIG. 8A

29

FIG. 8B

90

Management apparatus

901

Obtaining unit

902

Processing unit

FIG. 9

100

Management apparatus

1001

Obtaining unit

1002

Processing unit

FIG. 10

## INTERNATIONAL SEARCH REPORT

| International application No. |
| --- |
| **PCT/CN2023/133520** |

**A. CLASSIFICATION OF SUBJECT MATTER**

H04L41/5061(2022.01)i; H04L41/5009(2022.01)i; H04L41/147(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ENTXT, CNKI, 3GPP: 服务质量, 并发数, 时延, 成功率, 预测, 人工智能, 时间, 周期, 第一, 第二, 短信, 服务, 通道, 信道, service, quality, predict+, AI, time, period, first, second, SMS, short message, channel, CPaaS

**C. DOCUMENTS CONSIDERED TO BE RELEVANT**

| Category* | Citation of document, with indication, where appropriate, of the relevant passages | Relevant to claim No. |
| --- | --- | --- |
| A | CN 112839354 A (ZHONGTONG TIANHONG (BEIJING) COMMUNICATION TECHNOLOGY CO., LTD.) 25 May 2021 (2021-05-25) entire document | 1-25 |
| A | AU 2021102870 A4 (VISHWAKARMA INSTITUTE OF INFORMATION TECHNOLOGY) 19 May 2022 (2022-05-19) entire document | 1-25 |
| A | US 2020107212 A1 (VOLKSWAGEN AG.) 02 April 2020 (2020-04-02) entire document | 1-25 |
| A | US 2020401913 A1 (BEIJING BAIDU NETCOM SCIENCE AND TECHNOLOGY CO., LTD.) 24 December 2020 (2020-12-24) entire document | 1-25 |
| A | WO 2022048745 A1 (LENOVO (SINGAPORE) PTE. LTD. et al.) 10 March 2022 (2022-03-10) entire document | 1-25 |
| A | WO 2023030607 A1 (ROBERT BOSCH GMBH) 09 March 2023 (2023-03-09) entire document | 1-25 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 February 2024** | **21 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/133520**

| Patent document cited in search report | | | Publication date (day/month/year) | Patent family member(s) | | | Publication date (day/month/year) |
|---|---|---|---|---|---|---|---|
| CN | 112839354 | A | 25 May 2021 | None | | | |
| AU | 2021102870 | A4 | 19 May 2022 | None | | | |
| US | 2020107212 | A1 | 02 April 2020 | EP | 3634017 | A1 | 08 April 2020 |
| | | | | US | 11223969 | B2 | 11 January 2022 |
| US | 2020401913 | A1 | 24 December 2020 | US | 11449774 | B2 | 20 September 2022 |
| WO | 2022048745 | A1 | 10 March 2022 | US | 2023337043 | A1 | 19 October 2023 |
| | | | | EP | 4209036 | A1 | 12 July 2023 |
| WO | 2023030607 | A1 | 09 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310348130